# EUROPEAN PATENT SPECIFICATION

(11) **EP 0 936 970 B1**
(45) Date of publication and mention of the grant of the patent: **12.06.2002**
(21) Application number: 97904704.0
(22) Date of filing: 10.02.1997
(51) Int. Cl.: B31F 5/04, B23B 31/02, B65H 9/18

(54) **DEVICE FOR JOINING TOGETHER FLAT OBJECTS**
VORRICHTUNG ZUM MITEINANDERVERBINDEN VON FLACHEN GEGENSTÄNDEN
DISPOSITIF PERMETTANT DE REUNIR DES OBJETS PLATS

(30) Priority: 14.02.1996 SE 9600566
(43) Date of publication of application: 25.08.1999
(73) Proprietor: Lamina System Aktiebolag, 502 47 Boras (SE)
(72) Inventor: HARJAPÄÄ, Osmo, S-513 50 Sparsör (SE)
(74) Representative: Hynell, Magnus
(86) International application number: SE9700191
(87) International publication number: WO9729905

(56) References cited:
- DE-A- 4 117 347
- NO-B- 158 124
- SE-B- 433 926
- US-A- 3 547 013
- US-A- 4 496 417

## Description

### TECHNICAL FIELD

The invention relates to a method and a device for joining together flat and essentially plane objects, in which the two objects are fed forwards along an upper and lower conveyor, respectively, to a joining position, the lower object being coated with adhesive before the joining position. An example of such a device is shown in SE-A-433 926.

### BACKGROUND TO THE INVENTION

In a known machine for fully automatic or semi-automatic sheet lining of lower sheets of cardboard, board or corrugated board with upper sheets of paper, plastic foil or cardboard, the upper surface of the lower sheet is provided with glue before the two sheets are pressed together. Before being pressed together, they have to be brought to the correct position - registered - relative to each other. In the prior art, the way in which this operation has been carried out is that the sheets have been pressed via one side edge against longitudinal stays by means of mechanical moving members, as the sheets are fed forwards towards an end stop.

However, the known devices have not always functioned satisfactorily. In many cases the upper sheet has ended in an oblique position in relation to the lower sheet, with unsatisfactory joining together as a result.

Similar problems are also encountered within other technology areas, for example in the printing technology for multicolour printing on sheets.

Other problems with known devices concern the pressing together after the sheets have been positioned. In these devices, the two sheets are fed in between two rolls. If the two sheets do not lie correctly in relation to each other, or if the upper sheet is relatively thin, the upper sheet is displaced or folded in relation to the lower sheet, with poor matching and ugly longitudinal creases as a consequence.

Further problems with known devices concern the detection of when both upper sheet and lower sheet have been fed forwards to be pressed together. If, for example, only a glue-coated lower sheet has been fed forwards and the device does not wait until an upper sheet is in place too before pressing together, the lower sheet with its glue will be fed through the press rolls, the consequence being that these rolls are covered with glue, and the machine has to be stopped and cleaned before it is again operational.

### DISCLOSURE OF THE INVENTION

The object of the invention is to remedy the list of problems mentioned above. According to the invention, this is done by means of a device according to claim 1.

Further characteristics, aspects and advantages of the invention are evident from the attached dependent patent claims and from the following description of one possible embodiment.

### BRIEF DESCRIPTION OF THE FIGURES

In the following description of a preferred embodiment, reference is made to the attached drawing figures, where
- Fig. 1: is a perspective view of the device according to the invention,
- Fig. 2: is a plan view of an upper sheet conveyor forming part of the invention,
- Fig. 3: is a perspective partial view of an upper and a lower sheet conveyor,
- Fig. 4: is a plan view of a lower sheet conveyor forming part of the invention,
- Fig. 5: is a detail view of a pressing unit forming part of the invention.

### DESCRIPTION OF PREFERRED EMBODIMENT

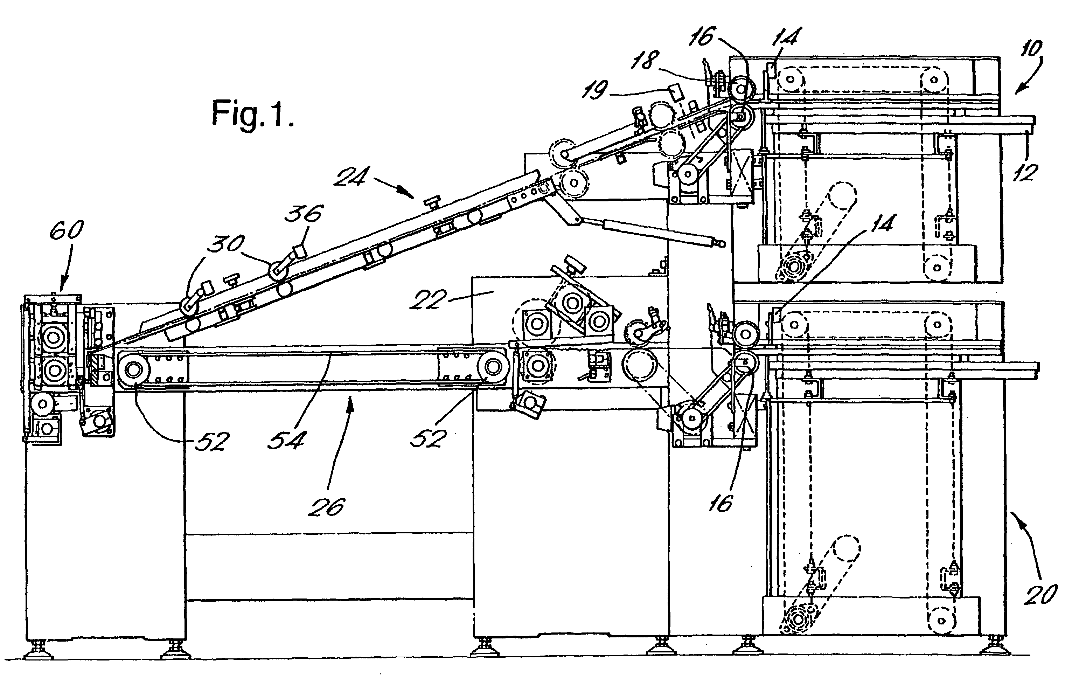

Referring first to Fig. 1, the right-hand side of the figure shows an upper sheet feeder 10 for upper sheets. The sheet feeder 10 comprises a plane plate 12 on which a stack of upper sheets is placed. The plate 12 can be gradually raised as the sheets are lifted off. The sheet feeder 10 also comprises pick-up and forwarding members 14, for example in the form of vacuum suction cups able to lift up the front edge of the uppermost sheet and move it forwards to a driven roll 16. Spring-loaded press wheels 18 are pressed against the roll 16 so that a nip is formed between them, which nip means that the lifted sheet can be fed onwards. After the roll 16, as viewed in the direction of feed, there is a sensor 19, hereinafter called sensor I, whose function will be described in more detail below.

Arranged below the upper sheet feeder 10 there is a lower sheet feeder 20. The lower sheet feeder 20 is designed in the same way as the upper sheet feeder, and with the same pick-up and forwarding members. In front of the lower sheet feeder 20, as viewed in the direction of feed M for the sheets, i.e. towards the left in Fig. 1, there is a gluing station 22 arranged for coating suitable adhesive onto the upper surface of the lower sheets.

After the upper sheet feeder 10 and after the gluing station 22, the device is provided with an upper sheet conveyor 24 and lower sheet conveyor 26, which conveyors will be described in more detail below.

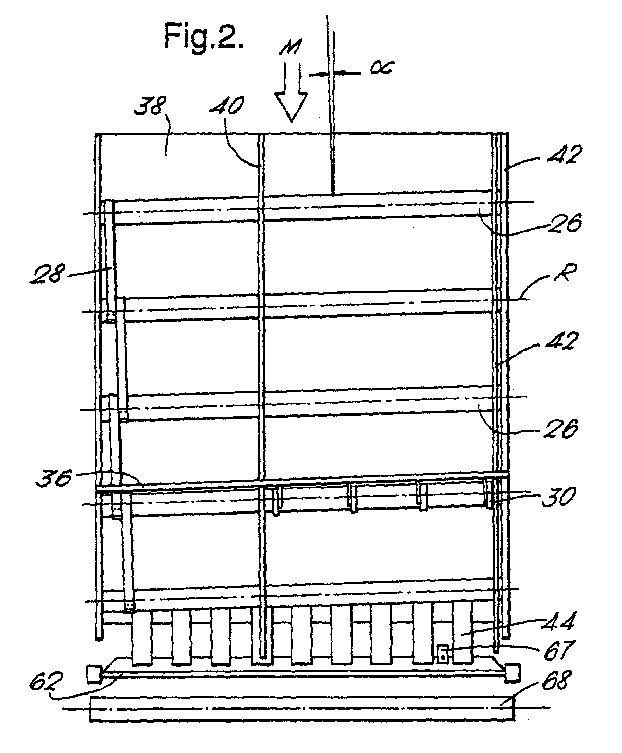

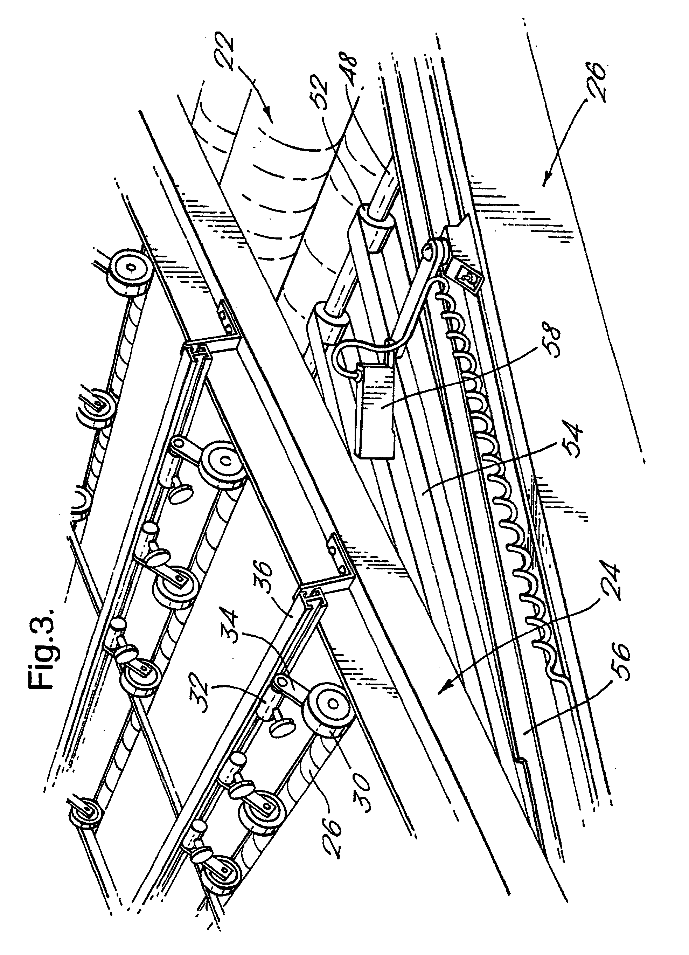

The upper sheet conveyor 24 is designed as a plane table. Fig. 2 shows the sheet conveyor from above. The sheet conveyor 24 comprises a number of driven rolls 26 recessed in the table so that their upwardly directed cylinder surface is in the plane of the table. In the embodiment shown, the uppermost roll, as viewed in the direction of feed M, is driven with the aid of a suitable motor. The driving is then transmitted to the other rolls with the aid of belts 28, so that all the rolls rotate at the same speed. A number of press rollers 30 are arranged on each roll 26, Figs 2 and 3. For the sake of clarity, press rollers are shown only on one roll. in Fig. 2. The press rollers 30 are rotatably arranged on an arm 32 which in turn is arranged to pivot on a bracket 34. The bracket 34 is provided with a helical spring (not shown) which induces the arm 32 to pivot downwards towards the table and thus induces the press roller 30 to press against the roll 26. The bracket 34 is arranged on a rail 36, extending over the rolls, such that it can be displaced along the rail 36. Arranged between the rolls 26 there are plane panels 38. The upper sheet conveyor 24 is also provided with longitudinal stays 40, 42, at least the left-hand stay 40 seen in Fig. 2 being displaceable transverse to the direction of feed. In the embodiment shown, the rolls 26 are turned slightly so that the normals of the axes of rotation R form an angle a with the direction of feed, so that when the sheets are fed forwards they are also displaced slightly sideways towards the right-hand longitudinal stay 42. At the lower end of the sheet conveyor there are slide tongues 44 for guiding the sheets towards a pressing unit, which unit will be described in more detail below.

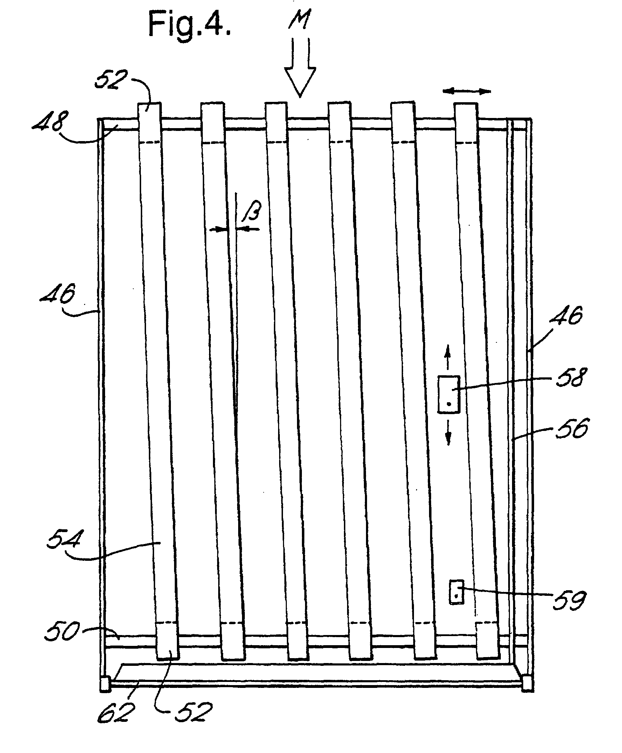

The lower sheet conveyor 26 is shown partially in Fig. 3 and in Fig. 4. It comprises two longitudinal side pieces 46. Two shafts 48, 50 are mounted rotatably at the ends of these side pieces 46. One of the shafts is driven by a suitable motor. Arranged on each shaft there are a number of rollers 52. The rollers 52 are each designed with a clamp lock which, when activated, allows the rollers to be displaced along the shafts. When the roller is released, it locks itself against rotation and displacement. The rollers on each respective shaft form pairs between which drive belts 54 are arranged, which belts are able to drive the lower sheets forwards. The lower sheet conveyor 26 is also provided with a longitudinal stay 56, which stay is displaceable transversely to the direction of feed M. The rollers 52 on the shafts are expediently offset so that the belts 54 do not run parallel to the direction of feed, but instead at an angle b to the direction of feed, so that when the sheets are fed forwards, they are also displaced slightly sideways towards the longitudinal stay 56. The lower sheet conveyor is provided with two sensors 58, 59 for detection, hereinafter called sensors II and III. Sensor II (58) is arranged to be movable in the direction of feed, and sensor III (59) is placed nearer the pressing unit 60 than sensor II. Their positioning and function will be described in more detail below.

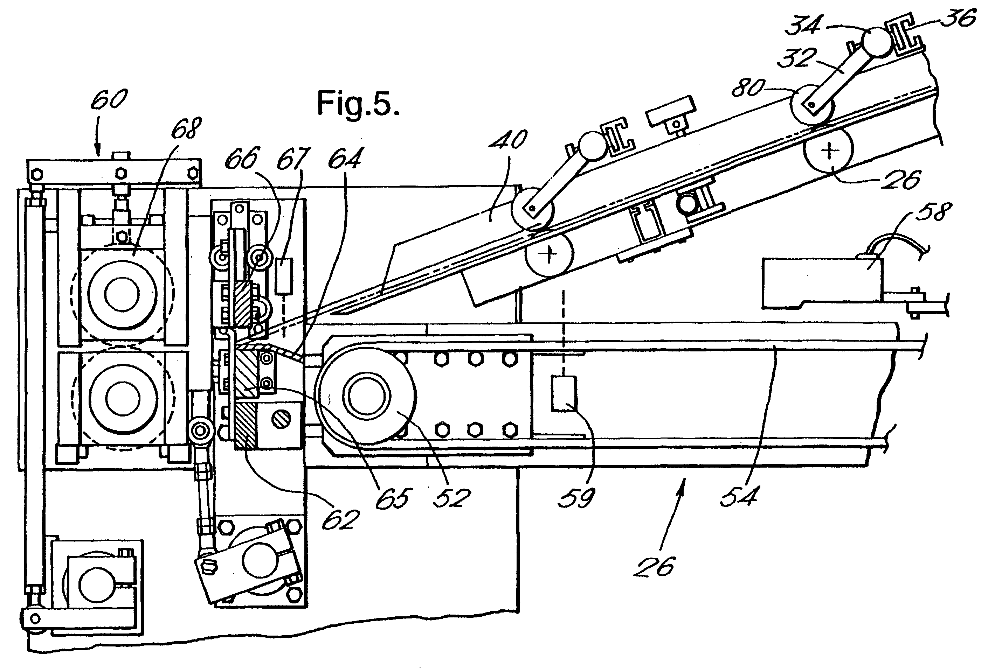

After the sheet conveyors, as viewed in the direction of feed, the device is provided with a pressing unit 60, which will be described in connection with Fig. 5. The pressing unit 60 comprises an end stop or stay 62 which runs transverse to the direction of feed M. The end stop 62 is arranged so that it can be displaced vertically with the aid of a suitable member (not shown). Upstream of the end stop 62, as viewed in the direction of feed, there is a slide plate 64, the latter being intended to guide the upper and lower sheets towards the end stop 62. The slide plate also functions as a counterstay 65 for a presser foot 66. The presser foot 66 also runs transverse to the direction of feed M and is also arranged so that it can be displaced vertically. The presser foot 66 is arranged in relation to the end stop 62 such that the presser foot is pushed downwards immediately in front of the end stop. Arranged level with the guide plate, as viewed in the vertical direction, there is a sensor 67, hereinafter called sensor IV, whose function will be described below. Downstream of the end stop 62 and the presser foot 66, the unit is arranged with two clamping rolls 68 arranged one above the other, where the upper roll is displaceable in the vertical direction in order to regulate the clamping force between them. The rolls are preferably made of a relatively elastic material.

The device is conceived to function in the following way. The plates 12 of the two sheet feeders are provided with stacks of material. When the device is activated, the plates are raised to the right level so that the pick-up members 14 can take the uppermost sheet from each stack. The device functions such that an upper sheet is first picked up and moved forwards to the upper sheet conveyor. At this stage, the rolls 26 are brought into operation and feed the sheets forwards. Sensor I (19) registers that a sheet is located beneath it. When the sheet has passed sensor I, the latter indicates that no sheet is located there, which activates the pick-up member 14 so that it picks up a new upper sheet. A certain interspace is thus formed between the upper sheets on the upper sheet conveyor. The interspace between the sheets can be adjusted by variable delay of the pick-up member. The upper sheets are in this way moved in between the longitudinal stays 40, 42, where the distance between them is set slightly greater than the width of the sheets. The left-hand stay 40 ensures that the sheets, when they are being fed onto the table, are oriented somewhat towards the side. They are moved gradually onwards and downwards by the rolls 28 towards the pressing unit, at the same time as they are moved towards the right-hand stay 42 and thus positioned to the side by means of the inclined position of the rolls. The press rollers 30 ensure that the sheets bear firmly against the rolls so that no slipping can take place.

After a certain predetermined time following the activation of the pick-up member of the upper sheet feeder, the pick-up member of the lower sheet feeder is also activated. The lower sheet is moved through the gluing station 22, which coats its upper surface with suitable adhesive. The lower sheet is then fed onwards onto the drive belts 54 where it is fed forwards, on the one hand, towards the pressing unit 60 and, on the other hand, towards the longitudinal stay 56 by means of the inclined position of the belts 54.

In the pressing unit and the lower sheet conveyor there are a number of sensors which indicate the stage of the procedure and which trigger certain functions in the device. When the upper sheet reaches the end stop 62, sensor IV (67) is activated, and the driving of the rolls 28 of the upper sheet conveyor is stopped, at the same time as a signal is sent to the control equipment to indicate that the upper sheet is in place. The upper sheet now lies, on the one hand, against the right-hand longitudinal stay 42, and, on the other hand, against the end stop 62 and is thus positioned both sideways and lengthwise. It is additionally held in place by the nip between the rolls and the press rollers. A short time later the lower sheet is fed forwards towards the pressing unit 60. The sensor III (59), arranged near the unit, then indicates that the lower sheet is on its way forwards. When the lower sheet has been fed forwards towards the end stop 62, sensor II (58), which is placed at a distance from the end stop corresponding to the length of the lower sheet, will indicate that the lower sheet is no longer present there, i.e. that the lower sheet is in place for pressing together. The lower sheet now bears against the longitudinal stay 56 and the end stop 62, and it too is thus also positioned both sideways and lengthwise. Both upper sheet and lower sheet are thus in register with each other. The feeding of the lower sheets is at all times active as to ensure that the lower sheets are kept in place and do not bounce back when they hit the end stop. When all the sensors have now indicated that both upper sheet and lower sheet are present, the presser foot 66 is activated and presses together the front edges of the sheets. The pressing takes place for a specific predetermined time depending on what adhesive is used. When the pressing is complete, the presser foot 66 is lifted, the end stop 62 is lowered, and the feeding of the upper sheets begins. Thus, the two sheets are fed forwards between the press rolls and in so doing are joined together completely. Sensor II is adjustable in the direction of feed so that sheets of different lengths will be able to be treated and indicated. When the feeding of the upper sheets starts again, sheets lying in the upper sheet conveyor are fed downwards towards the pressing unit. At the same time, the lower sheet feeder receives an impulse to pick up a new sheet and feed it into the gluing station.

To sum up, the pressing only takes place when signals are given in the following order, namely first from sensor IV, i.e. a signal indicating that an upper sheet is in place, then from sensor III, i.e. that a lower sheet is on its way forwards, and finally from sensor II, i.e. that the lower sheet is bearing against the end stop. If the signals are not received in this order, pressing will not take place. This ensures, for example, that a glue-coated lower sheet on its own is prevented from being fed through the press unit.

The interspaces between the upper sheets depend to a large extent on what type of adhesive is used and, thus, on how long the presser foot needs to press the sheets together before they can be fed onwards. In continuous operation, it is therefore not certain that sensor I will determine when the next upper sheet is to be picked up, and instead this can be timed via the control equipment.

The stays for the upper and lower sheets can be displaced depending on requirements. It may sometimes be desirable for the upper sheet to extend a little beyond the lower sheet after pressing together, and this can simply be done via the stays, while maintaining the register between them.

If necessary, the lower sheet conveyor can also be provided with press rollers. In some cases this may be desirable if the lower sheets are not plane, which can lead to uneven bearing against the belts, which means that the sheets are not fed forwards correctly. Tests have shown that one or two press rollers arranged near the side edges of the sheets suffice. The press rollers preferably have a small width so that they have as little effect as possible on the glue-coated surfaces of the sheets.

The device is preferably controlled by a PLC system (programmable logic controller) which controls motors and other drive devices and receives information from sensors.

It will be appreciated that the invention is not limited to the embodiment described above and shown in the drawing figures, and that it can instead be modified within the scope of the patent claims which follow. Thus, the feeding devices for the sheet conveyors can be of another design. There are also a large number of different sensors and control systems available which can perform the required functions. In the description of the embodiment shown, the word sheet has been used. It must be understood in this context that this can include paper, board, cardboard, corrugated board, plastic foil, building boards, plywood, wood slabs, panels of foamed plastic and the like, that is to say, in brief, flat objects which can be joined to each other.

## Claims

1. Device for joining together two flat and essentially plane objects, comprising
- two conveyors (24, 26), the one placed above the other,
- at least one longitudinal stay (42, 56) on each conveyor,
- drive devices (26, 28, 30, 48, 52, 54) on each conveyor which are able to drive the said objects forwards towards a joining position, **characterized in that** said drive devices (26,28,30,48,52,54) are further able to drive the objects towards the longitudinal stay (42, 56) and **in that** said device comprises,
- a mutual, vertically displacable stop member (62) for the two objects, arranged at the joining position, for registering the front edges of the objects in relation to each other, and
- a presser foot (66) arranged at the joining position, for pressing together the two forward fed objects at their front edges, as viewed in the direction of feed.

2. Device according to Claim 1, **characterized by** a pair of rolls (68) arranged downstream of the presser foot (66) as viewed in the direction of feed, and arranged to press the two objects together completely.

3. Device according to Claim 1, **characterized in that** the drive device of the upper conveyor comprises rolls (26) and press rollers (30) arranged to press against the said rolls, and **in that** the said rolls are connected to a drive unit, whereby the nip between the rolls and the drive rollers is arranged to feed the object forwards.

4. Device according to Claim 3 **characterized in that** the said rolls (26) are turned so that the normals of the axes of rotation R form an angle a with the direction of feed, and the objects are also displaced towards the said longitudinal stay (42) as they are fed forwards.

5. Device according to Claim 1, **characterized in that** the drive device of the lower conveyor comprises a number of drive rollers (52) arranged on driven shafts (48, 50) and drive belts (54) associated with the drive rollers, the drive rollers being displaceably arranged on the shafts so that the direction of feed of the drive belts can be adjusted.

6. Device according to any of Claims 1-5, **characterized in that** the objects on the upper conveyor (24) are always fed forwards to the joining position before the objects on the lower conveyor.

7. Device according to Claim 1, **characterized in that** sensors (58, 59, 67) are arranged to detect when the two objects have reached the joining position.

8. Device according to Claim 7, **characterized in that** it comprises a sensor (67), here called sensor IV, able to indicate when the objects from the upper conveyor have reached the joining position, a sensor (59), here called sensor III, able to indicate when the objects from the lower conveyor are being fed forwards, and a sensor (58), here called sensor II, able to indicate when the objects from the lower conveyor are in the joining position.

9. Device according to Claim 8, **characterized in that** the indication from the sensors takes place in the following order, first sensor IV, then sensor III, and finally sensor II, in order that the presser foot will press the objects together.

10. Device according to Claim 8, **characterized in that** the drive device (26, 28) of the upper conveyor is stopped when sensor IV (67) indicates that an object from the upper conveyor is in the joining position.

## Patentansprüche

1. Vorrichtung zum gegenseitigen Verbinden zweier flacher und im wesentlichen ebener Gegenstände, die umfaßt:
- zwei Fördereinrichtungen (24, 26), wovon eine über der anderen angeordnet ist,
- wenigstens eine longitudinale Strebe (42, 56) an jeder Fördereinrichtung,
- Antriebsvorrichtungen (26, 28, 30, 48, 52, 54) an jeder Fördereinrichtung, die die Gegenstände vorwärts zu einer Verbindungsposition antreiben können, **dadurch gekennzeichnet, daß** die Antriebsvorrichtungen (26, 28, 30, 48, 52, 54) die Gegenstände außerdem zur longitudinale Strebe (42, 56) antreiben können und daß die Vorrichtung umfaßt:
- ein gemeinsames vertikal verschiebbares Anschlagelement (62) für die beiden Gegenstände, das an der Verbindungsposition angeordnet ist, um die Vorderkanten der Gegenstände relativ zueinander auszurichten, und
- einen Preßfuß (66), der an der Verbindungsposition angeordnet ist, um die beiden nach vorn vorgeschobenen Gegenstände an ihren Vorderkanten bei Betrachtung in Vorschubrichtung zusammenzupressen.

2. Vorrichtung nach Anspruch 1, **gekennzeichnet durch** ein Paar Walzen (68), die auf der Auslaßseite des Preßfußes (66) bei Betrachtung in Vorschubrichtung angeordnet sind und so beschaffen sind, daß sie die beiden Gegenstände vollständig zusammenpressen können.

3. Vorrichtung nach Anspruch 1, **dadurch gekennzeichnet, daß** die Antriebsvorrichtung der oberen Fördereinrichtung Walzen (26) und Preßrollen (30) umfaßt, die so angeordnet sind, daß sie die Walzen gegeneinander pressen, und daß die Walzen mit einer Antriebseinheit verbunden sind, wobei der Walzenspalt zwischen den Walzen und den Antriebsrollen so beschaffen ist, daß er die Objekte nach vorn vorschiebt.

4. Vorrichtung nach Anspruch 3, **dadurch gekennzeichnet, daß** die Walzen (26) so gedreht werden, daß die Normalen der Drehachsen R einen Winkel a zur Vorschubrichtung bilden und die Gegenstände auch zur longitudinalen Strebe (42) verschoben werden, wenn sie vorgeschoben werden.

5. Vorrichtung nach Anspruch 1, **dadurch gekennzeichnet, daß** die Antriebsvorrichtung der unteren Fördereinrichtung mehrere Antriebsrollen (52), die an angetriebenen Wellen (48, 50) angeordnet sind, und Antriebsriemen (54), die den Antriebsrollen zugeordnet sind, umfaßt, wobei die Antriebsrollen an den Wellen verschiebbar angeordnet sind, so daß die Vorschubrichtung der Antriebsriemen eingestellt werden kann.

6. Vorrichtung nach einem der Ansprüche 1-5, **dadurch gekennzeichnet, daß** die Gegenstände auf der oberen Fördereinrichtung (24) stets vor den Gegenständen auf der unteren Fördereinrichtung nach vorn zur Verbindungsposition vorgeschoben werden.

7. Vorrichtung nach Anspruch 1, **dadurch gekennzeichnet, daß** Sensoren (58, 59, 67) angeordnet sind, um zu ermitteln, wann die beiden Gegenstände die Verbindungsposition erreicht haben.

8. Vorrichtung nach Anspruch 7, **dadurch gekennzeichnet, daß** sie einen Sensor (67), der hier Sensor IV genannt wird und angeben kann, wann die Gegenstände von der oberen Fördereinrichtung die Verbindungsposition erreicht haben, einen Sensor (59), der hier Sensor III genannt wird und angeben kann, wann die Objekte von der unteren Fördereinrichtung vorgeschoben werden, sowie einen Sensor (58), der hier Sensor II genannt wird und angeben kann, wann sich die Objekte von der unteren Fördereinrichtung in der Verbindungsposition befinden, umfaßt.

9. Vorrichtung nach Anspruch 8, **dadurch gekennzeichnet, daß** die Angaben von den Sensoren in der folgenden Reihenfolge: zuerst Sensor IV, dann Sensor III und schließlich Sensor II, erfolgen, damit der Preßfuß die Gegenstände gegeneinander preßt.

10. Vorrichtung nach Anspruch 8, **dadurch gekennzeichnet, daß** die Antriebsvorrichtung (26, 28) der oberen Fördereinrichtung angehalten wird, wenn der Sensor IV (67) angibt, daß sich ein Gegenstand von der oberen Fördereinrichtung in der Verbindungsposition befindet.

## Revendications

1. Dispositif de réunion de deux objets plats et essentiellement plans, comprenant
- deux transporteurs (24, 26), l'un étant placé au-dessus de l'autre,
- au moins un montant longitudinal (42, 56) sur chaque transporteur,
- des dispositifs d'entraînement (26, 28, 30, 48, 52, 54) sur chaque transporteur qui sont capables d'entraîner lesdits objets en avant vers une position de réunion **caractérisée en ce que** lesdits dispositifs d'entraînement(26, 28, 30, 48, 52, 54) sont capables en outre d'entraîner les objets vers le montant longitudinal (42, 56) et **en ce que** ledit dispositif comprend
- un élément formant butée (62) mobile verticalement, commun aux deux objets, installé au niveau de la position de réunion pour aligner les bords avant des objets l'un par rapport à l'autre, et
- une pédale de pression (66) installée au niveau de la position de réunion pour presser l'un contre l'autre les deux objets amenés en avant au niveau de leurs extrémités avant, suivant la direction de l'alimentation.

2. Dispositif selon la revendication 1, **caractérisé par** une paire de cylindres (68) installés en aval de la pédale de pression (66) en suivant la direction de l'alimentation et agencés pour presser complètement les deux objets l'un contre l'autre.

3. Dispositif selon la revendication 1, **caractérisé en ce que** le dispositif d'entraînement des transporteurs supérieurs comprend les cylindres (26) et des rouleaux presseurs (30) agencés pour presser contre lesdits cylindres, et **en ce que** lesdits cylindres sont reliés à une unité d'entraînement, grâce à quoi le pincement entre les cylindres et les rouleaux d'entraînement est agencé pour amener l'objet en avant.

4. Dispositif selon la revendication 3, **caractérisé en ce que** lesdits cylindres (26) sont tournés de telle façon que les perpendiculaires aux axes de rotation R forment un angle a avec la direction de l'alimentation, et **en ce que** les objets sont déplacés également vers ledit montant longitudinal (42) lorsqu'ils sont amenés en avant.

5. Dispositif selon la revendication 1, **caractérisé en ce que** le dispositif d'entraînement du transporteur inférieur comprend un certain nombre de rouleaux d'entraînement (52) installés sur les arbres entraînés (48, 50) et des courroies d'entraînement (54) associées aux rouleaux d'entraînement, les rouleaux d'entraînement étant installés sur les arbres de façon à pouvoir être déplacés de telle façon que la direction de l'alimentation des courroies d'entraînement peut être réglée.

6. Dispositif selon l'une quelconque des revendications 1 à 5, **caractérisé en ce que** les objets qui se trouvent sur le transporteur supérieur (24) sont toujours amenés en avant jusqu'à la position de réunion avant les objets qui se trouvent sur le transporteur inférieur.

7. Dispositif selon la revendication 1, **caractérisé en ce que** des capteurs (58, 59, 67) sont installés pour détecter le moment où les deux objets ont atteint la position de réunion.

8. Dispositif selon la revendication 7, **caractérisé en ce qu'**il comprend un capteur (67), appelé ici capteur IV, capable d'indiquer le moment où les objets provenant du transporteur supérieur ont atteint la position de réunion, un capteur (59), appelé ici capteur III, capable d'indiquer le moment où les objets provenant du transporteur inférieur sont amenés en avant, et un capteur (58), appelé ici capteur II, capable d'indiquer le moment où les objets provenant du transporteur inférieur sont dans la position de réunion.

9. Dispositif selon la revendication 8, **caractérisé en ce que** l'indication provenant des capteurs se produit dans l'ordre suivant, en premier lieu celle du capteur IV, ensuite celle du capteur III, et enfin celle du capteur II, afin que la pédale de pression puisse presser les objets pour les réunir.

10. Dispositif selon la revendication 8, **caractérisé en ce que** le dispositif d'entraînement (26, 28) du transporteur supérieur est arrêté lorsque le capteur IV (67) indique qu'un objet provenant du transporteur supérieur est dans la position de réunion.
